# EUROPÄISCHE PATENTSCHRIFT

(11) **EP 3 873 791 B1**
(45) Veröffentlichungstag und Bekanntmachung des Hinweises auf die Patenterteilung: **29.10.2025**
(21) Anmeldenummer: 19791213.2
(22) Anmeldetag: 18.10.2019
(51) Int. Cl.: B62D 21/18, B62D 21/04

(54) **FAHRZEUG MIT EINER TRAGSTRUKTUR**
VEHICLE HAVING A SUPPORT STRUCTURE
VÉHICULE POURVU D'UNE STRUCTURE PORTEUSE

(30) Priorität: 29.10.2018 DE 102018218505
(43) Veröffentlichungstag der Anmeldung: 08.09.2021
(73) Patentinhaber: Deere & Company, Moline, IL 61265 (US)
(72) Erfinder: PATINO, Mario, 68163 Mannheim (DE); LANG, Mattias, 68163 Mannheim (DE); THORESON, Curtis, 68163 Mannheim (DE); GROESSBRINK, Norbert, 68163 Mannheim (DE)
(74) Vertreter: Dehnhardt, Florian Christopher
(86) Internationale Anmeldenummer: PCT/EP2019/078384
(87) Internationale Veröffentlichungsnummer: WO 2020/088955

(56) Entgegenhaltungen:
- BE-A- 552 438
- DE-B- 1 172 548
- DE-C- 948 366
- FR-A- 1 012 996
- US-A- 4 746 145
- US-A1- 2013 306 394

## Beschreibung

Die Erfindung betrifft ein Fahrzeug mit einer Tragstruktur, welche einen vorderen Strukturabschnitt zur Aufnahme einer Vorderachs-Baugruppe aufweist und einen dem vorderen Strukturabschnitt in Fahrzeug-Längsrichtung gegenüberliegenden hinteren Strukturabschnitt aufweist, wobei zwischen dem vorderen Strukturabschnitt und dem hinteren Strukturabschnitt als Bestandteil der Tragstruktur ein Trägerteil mit einer Trägerwand angeordnet ist, welche quer zur Fahrzeug-Längsrichtung in Umfangsrichtung in sich geschlossen verläuft.

Eine derartige Tragstruktur dient dazu, für das Fahrzeug ein stabiles Gerüst oder einen Rahmen zu bilden, an dem einzelne Fahrzeugfunktionen wie beispielsweise Achsen, Federung, Lenkung, Motor befestigt werden. Je nach Anwendung der Tragstruktur werden von dieser eine große Verwindungssteifigkeit, eine große Biegefestigkeit und/oder eine große Tragkraft bei gleichzeitig kompakter Bauweise und möglichst geringem Gewicht gefordert.

In diesem Zusammenhang geht aus der US 2013/306394 A1 eine Tragstruktur für ein Fahrzeug hervor, bei der ein Motor einschließlich einer gegebenenfalls vorhandenen Ölwanne an einem vorderen Strukturabschnitt eines Trägerteils angebracht ist. Dabei werden mögliche Torsions- und Biegebeanspruchungen durch den Motorblock hindurchgeleitet.

Der vorliegenden Erfindung liegt die Aufgabe zugrunde, die Belastbarkeit der Tragstruktur hinsichtlich ihrer Verwindungssteifigkeit zu verbessern.

Diese Aufgabe wird durch ein Fahrzeug mit den Merkmalen des Patentanspruchs 1 gelöst.

Weitere vorteilhafte Ausgestaltungen des erfindungsgemäßen Fahrzeugs gehen aus den Unteransprüchen hervor.

Gemäß Patentanspruch 1 weist die Tragstruktur eines Fahrzeugs einen vorderen Strukturabschnitt und einen in Fahrzeug-Längsrichtung gegenüberliegenden hinteren Strukturabschnitt auf. Der vordere Strukturabschnitt kann eine Vorderachs-Baugruppe aufnehmen. Zwischen dem vorderen und dem hinteren Strukturabschnitt ist als Bestandteil der Tragstruktur ein Trägerteil mit einer Trägerwand angeordnet, welche quer zur Fahrzeug-Längsrichtung in Umfangsrichtung in sich geschlossen verläuft, d.h. das Trägerteil hat einen umfangsmäßig bzw. entlang der Umfangsrichtung in sich geschlossenen Querschnitt. Hierdurch bildet das Trägerteil einen besonders stabilen Bestandteil der Tragstruktur und unterstützt eine große Verwindungssteifigkeit der gesamten Tragstruktur. Des Weiteren ist ein Bestandteil einer mehrteiligen Fahrzeugkomponente einstückig als Komponentenwandung mit dem Trägerteil hergestellt, wobei die Komponentenwandung einen Hohlraum begrenzt, der als eine Ölwanne für ein Motoraggregat als Fahrzeugkomponente wirksam ist. Das Trägerteil verläuft dementsprechend durch die Ölwanne hindurch, sodass entlang der Fahrzeug-Längsrichtung auftretende Torsionslasten von dem Trägerteil effizient und stabil abgefangen werden können.

Je nach Dimensionierung der Tragstruktur und Anwendungsfall des Trägerteiles kann die Trägerwand entlang ihrer gesamten Erstreckung in Fahrzeug-Längsrichtung umfangsmäßig in sich geschlossen sein oder in Fahrzeug-Längsrichtung lediglich abschnittsweise umfangsmäßig in sich geschlossen sein. Ohne nennenswerte Verminderung der Torsionssteifigkeit kann die Trägerwand auch an geeigneten Stellen von mindestens einer Wandöffnung perforiert sein, um beispielsweise Service- oder Montagetätigkeiten an dem Fahrzeug zu erleichtern.

Das Trägerteil kann einstückig (z.B. als Gussteil) oder mehrteilig ausgebildet sein. Bei der mehrteiligen Variante werden die einzelnen Bestandteile - beispielsweise eine obere und eine untere Hälfte - miteinander fest verbunden (z.B. Schweiß- oder Schraubverbindung).

Der vordere Strukturabschnitt ist vorzugsweise derart dimensioniert, dass er zur Aufnahme unterschiedlicher Vorderachstypen oder unterschiedlicher Vorderachs-Baugruppen (z.B. ungefedert, einzelradgefedert) geeignet ist. Hierdurch können unterschiedliche Vorderachs-Baugruppen bzw. Vorderachstypen mit demselben Trägerteil kombiniert und daran beispielsweise angeflanscht werden. Dies unterstützt einen baukastenartigen, modularen und somit kostengünstigen Aufbau der gesamten Tragstruktur.

Gegebenenfalls hat der vordere Strukturabschnitt eine Schnittstelle zur Befestigung eines Halterahmens für einen Frontkraftheber und/oder für eine Frontzapfwelle. Optional weist der vordere Strukturabschnitt mindestens eine weitere Schnittstelle für die Vormontage eines Fahrzeugaggregates (z.B. Kühler) auf.

Der hintere Strukturabschnitt weist beispielsweise einzelne Rahmenteile der Tragstruktur auf. Dieser Strukturabschnitt nimmt in einer Ausführungsform eine Hinterachse des Fahrzeugs oder eine Hinterachs-Baugruppe auf. Dieser Strukturabschnitt kann in weiteren Ausführungsformen gehäuseartige Bestandteile von einzelnen Fahrzeugkomponenten aufweisen.

Das Fahrzeug ist vorzugsweise ein Nutzfahrzeug, insbesondere ein landwirtschaftliches Fahrzeug (z.B. Schlepper, Traktor).

Der in sich geschlossene Verlauf der Trägerwand in Umfangsrichtung kann als ein Querschnitt, insbesondere Profilquerschnitt, des Trägerteiles betrachtet werden. Vorzugsweise ist dieser Querschnitt entlang der Fahrzeug-Längsrichtung unterschiedlich ausgebildet. Hierdurch kann das Trägerteil materialsparend an die jeweils gewünschte Dimensionierung der Tragstruktur hinsichtlich unterschiedlicher Eigenschaften wie Gewicht, Schwerpunktlage, Torsionssteifigkeit, Biegefestigkeit und Tragkraft angepasst werden. In seinem dem vorderen Strukturabschnitt zugewandten Bereich ist das Trägerteil und insbesondere der Querschnitt seiner Trägerwand in einer bevorzugten Ausführungsform derart gering dimensioniert, dass einerseits die erwarteten Torsionslasten stabil abgefangen werden und andererseits besonders große Lenkeinschläge der Fahrzeugräder ermöglicht werden. Dies unterstützt kleine Wendekreise des Fahrzeugs.

Der betrachtete Querschnitt kann den Verlauf einer Außenwandung oder einer Innenwandung der Trägerwand repräsentieren. Beispielsweise kann der Querschnitt des Trägerteiles in Richtung des vorderen oder hinteren Strukturabschnittes insbesondere im Sinne eines verringerten Wendekreises des Fahrzeugs verjüngt ausgebildet sein. Die in sich geschlossene Trägerwand hat zumindest abschnittsweise vorzugsweise einen kreisförmigen Querschnitt, wodurch die Torsionssteifigkeit weiter vergrößert ist. Die Torsionssteifigkeit und Biegefestigkeit des Trägerteiles können auch durch weitere mit dem Trägerteil verbundene Trägerelemente unterstützt werden, beispielsweise durch horizontal verlaufende Trägerelemente im Bodenbereich des Trägerteiles und im davon entlang der Höhenrichtung gegenüberliegenden Spitzenbereich des Trägerteiles.

Für eine montagetechnisch einfache Verbindung mit dem vorderen Strukturabschnitt weist das Trägerteil vorzugsweise eine vordere Befestigungs-Schnittstelle auf. Für eine montagetechnisch einfache Verbindung mit dem hinteren Strukturabschnitt weist das Trägerteil vorzugsweise eine hintere Befestigungs-Schnittstelle auf. Dabei kann eine unmittelbare Verbindung mit einzelnen Teilen des hinteren Strukturabschnittes vorgesehen sein. Alternativ oder zusätzlich kann das Trägerteil mit dem hinteren Strukturabschnitt mittelbar verbunden sein, indem das Trägerteil an einer Fahrzeugkomponente (z.B. Getriebegehäuse oder Getriebe-/Differential-Block) befestigt ist, welche wiederum mit dem hinteren Strukturabschnitt fest verbunden ist.

Die vorgenannte Verbindung des Trägerteiles mit mindestens einem der Strukturabschnitte ist vorzugsweise starr und/oder lösbar ausgebildet. Beispielsweise weist die jeweilige Befestigungs-Schnittstelle mindestens ein lösbares Spannelement (z.B. Schraubbolzen) auf. Dessen Spannkraftrichtung ist insbesondere in Fahrzeug-Längsrichtung oder etwa in einer durch die Fahrzeug-Längsrichtung und die Fahrzeug-Querrichtung aufgespannten Ebene wirksam und verbindet hierdurch das Trägerteil mit dem jeweiligen Strukturabschnitt auf mechanisch stabile Weise. Alternativ oder zusätzlich kann auch mindestens ein Verbindungsbolzen vorgesehen sein. Dieser durchsetzt die jeweilige Befestigungs-Schnittstelle und den zugeordneten Strukturabschnitt vorzugsweise in Querrichtung des Fahrzeugs und unterstützt hierdurch eine kostengünstige und gleichzeitig mechanisch stabile Verbindung innerhalb der Tragstruktur. Die einzelnen eingesetzten Spannelemente und/oder Verbindungsbolzen können in geometrisch unterschiedlicher Weise entlang der Fahrzeug-Längsrichtung zueinander versetzt angeordnet sein. Vorzugsweise flankiert eine Befestigungs-Schnittstelle den zugeordneten Strukturabschnitt derart beidseitig, dass ein Verbindungsbolzen die Befestigungs-Schnittstelle an mehreren (insbesondere zwei) voneinander durch den zugeordneten Strukturabschnitt beabstandeten Bereichen durchsetzt. Hierdurch können besonders hohe Torsionslasten stabil abgefangen werden. Dieses Befestigungsprinzip kann alternativ oder zusätzlich auch auf eine Befestigungs-Schnittstelle angewendet werden, welche beidseitig von dem zugeordneten Strukturabschnitt flankiert ist.

Vorzugsweise ist zwischen der Befestigungs-Schnittstelle und dem zugeordneten Strukturabschnitt mindestens ein Abstandhalter angeordnet. Hierdurch lassen sich unterschiedlich dimensionierte Tragstrukturen mit demselben Trägerteil realisieren, was die Kosten für die Herstellung des einzelnen Trägerteiles und auch der unterschiedlichen Tragstrukturen senkt. Außerdem erlaubt der mindestens eine Abstandhalter eine technisch einfache Anpassung der Tragstruktur an unterschiedliche Fahrzeugtypen und insbesondere an unterschiedliche Radstände.

Für einen montagefreundlichen Zusammenbau der Komponente weist der erste Bestandteil vorzugsweise eine Montage-Schnittstelle auf, an der mindestens ein weiterer Bestandteil der Komponente fixierbar ist.

Die Montage-Schnittstelle des ersten Bestandteiles der Komponente bietet den Vorteil, dass sie als Montageschablone oder Adapter für einen fehlerfreien Zusammenbau unterschiedlicher Versionen einer Komponente (z.B. unterschiedliche Motorblöcke) dienen kann. Außerdem können an der Montage-Schnittstelle geeignete Abstandhalterelemente vorgesehen sein, so dass dasselbe Trägerteil für den Zusammenbau unterschiedlicher Versionen einer Komponente und ggf. auch für funktional unterschiedliche Komponenten geeignet ist. An der Montage-Schnittstelle können auch Dämpferelemente und/oder Abdichtungselemente

(z.B. zur Abdichtung gegen Flüssigkeiten, insbesondere Öl) angeordnet sein.

In einer weiteren bevorzugten Ausführungsform begrenzt die Trägerwand des Trägerteiles entlang der Umfangsrichtung einen Aufnahmekanal zur Aufnahme einer Antriebswelle eines Antriebsstranges des Fahrzeugs. Hierdurch bietet das Trägerteil ohne zusätzlichen technischen Aufwand in einer weiteren Funktion einen stabilen Schutz für die Antriebswelle vor etwaigen Verschmutzungen, Beschädigungen oder anderen Beeinträchtigungen.

Der vordere Strukturabschnitt ist vorzugsweise aus einem Stahl hergestellt, z.B. als Gussteil oder als Schweißzusammenbau. Er kann käfigartig ausgebildet sein mit in Fahrzeug-Längsrichtung im Wesentlichen geschlossener vorderer und hinterer Käfigwand sowie mit in Fahrzeug-Hochrichtung im Wesentlichen geschlossener oberer und unterer Käfigwand. Die Vorderachs-Baugruppe kann dann montagefreundlich seitlich, d.h. in Querrichtung, gehandhabt werden und ist gleichzeitig in den anderen Richtungen vor etwaigen Beeinträchtigungen wirksam geschützt.

Abhängig von spezifischen Montage- und Einbauverhältnissen können einzelne Wandbereiche des vorderen Strukturabschnittes auch Aussparungen oder Unterbrechungen aufweisen. Hierdurch kann während und nach der Montage der Bewegungsspielraum für die Vorderachs-Baugruppe und/oder für andere Fahrzeugaggregate und -komponenten erhöht werden.

Um die vorgenannten Vorteile möglichst beizubehalten und gleichzeitig eine Leichtbauweise der Tragstruktur zu unterstützen, weist der vordere Strukturabschnitt vorzugsweise eine gitterartige Struktur mit mehreren Strukturstreben auf. Dabei bilden zumindest einige der Strukturstreben automatisch eine Begrenzung bzw. eine Art Silhouette für einen in Fahrzeug-Querrichtung zugänglichen Aufnahmeraum zur Aufnahme der Vorderachs-Baugruppe. Besonders flach ausgebildete Strukturstreben unterstützen den materialsparenden Aufbau dieses Strukturabschnittes und erleichtern hindernisfreie Bewegungen anderer Fahrzeugteile.

Soweit der vordere Strukturabschnitt in Fahrzeug-Hochrichtung betrachtet zwischen der Vorderachs-Baugruppe eine obere und eine untere Wand bzw. Begrenzung (z.B. mittels der Strukturstreben) aufweist, ermöglicht dies eine leichtere Bauweise der Tragstruktur, da das Widerstandsmoment des vorderen Strukturabschnittes durch oben und unten angeordnetes Material besonders hoch ist. Dies begünstigt auch die Torsionseigenschaften des vorderen Strukturabschnittes und somit der gesamten Tragstruktur.

Der vordere Strukturabschnitt kann einstückig oder aus mehreren Bestandteilen zusammengebaut ausgebildet sein. Einzelne Bestandteile werden beispielsweise miteinander lösbar verbunden, insbesondere verschraubt. Die aus mehreren Bestandteilen zusammengebaute Variante des vorderen Strukturabschnittes hat den Vorteil, dass zunächst die Vorderachs-Baugruppe mit vergrößertem Bewegungsspielraum besonders montagefreundlich eingebaut werden kann und erst danach der vordere Strukturabschnitt mit den noch fehlenden Bestandteilen (z.B. in Fahrzeug-Hochrichtung unterhalb der Vorderachs-Baugruppe angeordnete Bestandteile) komplettiert wird.

Das erfindungsgemäße Fahrzeug wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine perspektivische Darstellung einer ersten Ausführungsform des Trägerteils in seiner Montageposition zwischen einem vorderen und einem hinteren Strukturabschnitt der Tragstruktur,
- Fig. 2: eine perspektivische Darstellung des Trägerteiles in einer weiteren Ausführungsform,
- Fig. 3a bis 3e: schematische Darstellungen verschiedener Ausführungsformen einer Befestigungs-Schnittstelle des Trägerteils zur Verbindung mit dem vorderen Strukturabschnitt,
- Fig. 4: eine perspektivische Darstellung einer weiteren Ausführungsform des Trägerteils,
- Fig. 5: eine perspektivische Darstellung einer weiteren Ausführungsform des Trägerteils, und
- Fig. 6: eine perspektivische Darstellung einer weiteren Ausführungsform des Trägerteils in seiner Montageposition an einem vorderen Strukturabschnitt der Tragstruktur.

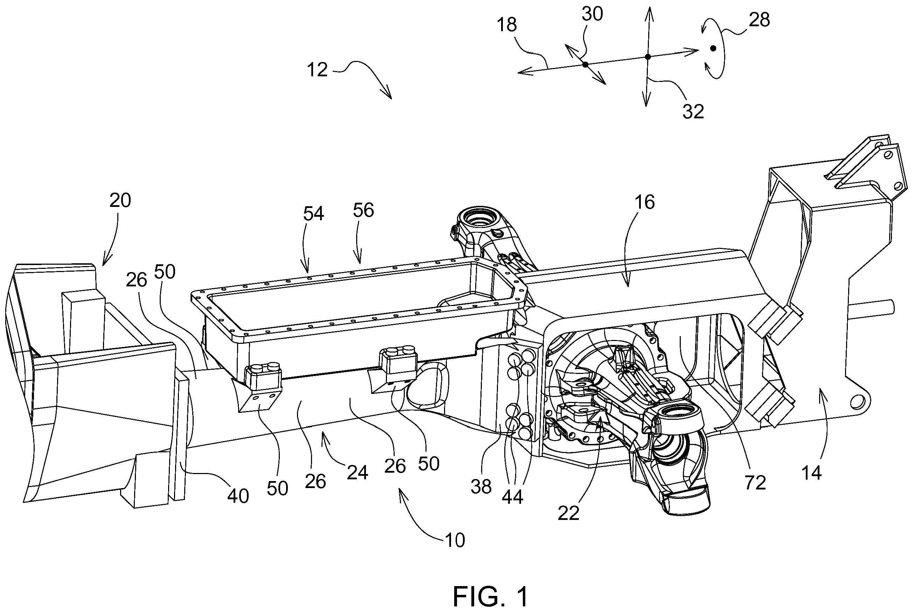

Fig. 1 zeigt ausschnittsweise eine Tragstruktur 10 eines hier nicht im Detail dargestellten landwirtschaftlichen Fahrzeugs 12 mit einem Halterahmen 14 für einen Frontkraftheber. Die Tragstruktur 10 weist u.a. einen vorderen Strukturabschnitt 16 und einen in Fahrzeug-Längsrichtung 18 gegenüberliegenden hinteren Strukturabschnitt 20 auf. Der vordere Strukturabschnitt 16 dient der Aufnahme einer Vorderachs-Baugruppe 22. Entlang der Fahrzeug-Längsrichtung 18 zwischen dem vorderen Strukturabschnitt 16 und dem hinteren Strukturabschnitt 20 ist als Bestandteil der Tragstruktur 10 ein Trägerteil 24 angeordnet. Eine Trägerwand 26 des Trägerteiles 24 ist quer zur Fahrzeug-Längsrichtung 18, d.h. entlang einer Umfangsrichtung 28, in sich geschlossen ausgebildet. Hierdurch kann die Verwindungssteifigkeit und Stabilität der Tragstruktur 10 unterstützt werden.

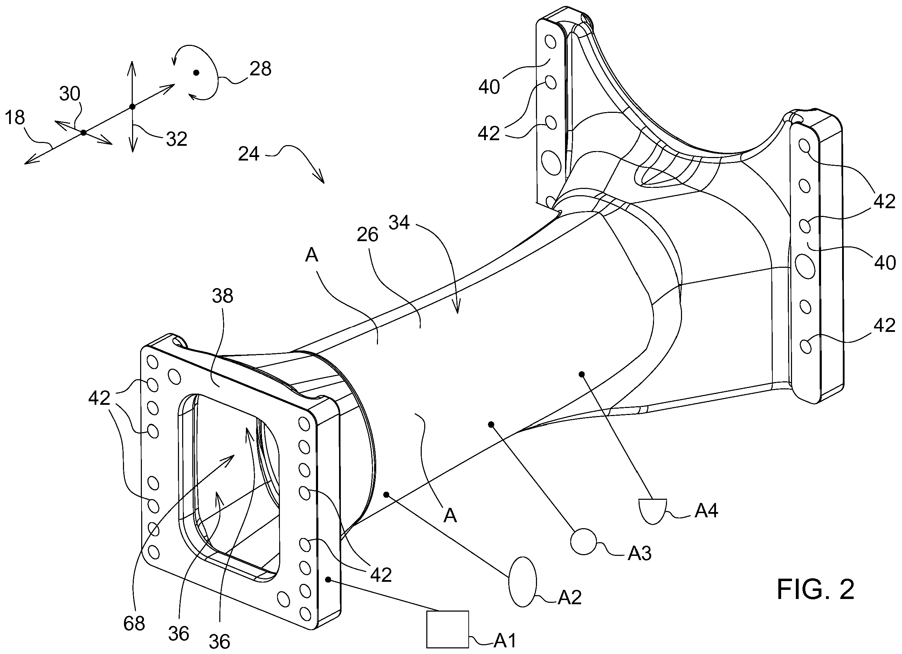

Anhand von Fig. 2 ist dargestellt, dass - unabhängig von der tatsächlichen detaillierten Ausgestaltung des Trägerteiles 24 - der in Umfangsrichtung 28 in sich geschlossene Verlauf der Trägerwand 26 einen Querschnitt A bildet. Dieser Querschnitt A liegt üblicherweise in einer etwa lotrecht zur Fahrzeug-Längsrichtung 18 angeordneten Querschnittsebene. Letztere ist also durch eine üblicherweise etwa horizontal verlaufende Querrichtung 30 und eine etwa vertikal verlaufende Hochrichtung 32 des Fahrzeugs 12 aufgespannt. Die Trägerwand 26 kann entlang der gesamten Erstreckung in Fahrzeug-Längsrichtung 18 oder entlang dieser Längsrichtung 18 auch nur abschnittsweise einen in sich geschlossenen Wandverlauf aufweisen. Abweichend von der in Fig. 2 lediglich schematisch angedeuteten Ausgestaltung des Trägerteiles 24 ist dort dargestellt, dass der Querschnitt A entlang der Fahrzeug-Längsrichtung 18 unterschiedlich dimensioniert ist. Beispielsweise kann ein zunächst quadratischer Querschnitt A1 in einen ovalen Querschnitt A2, danach in einen kreisrunden Querschnitt A3 und daraufhin in einen etwa hufeisenförmigen Querschnitt A4 übergehen. Der betrachtete Querschnitt A kann sich auf eine Außenwandung 34 oder auf eine Innenwandung 36 der Trägerwand 26 beziehen.

Weiterhin ist in Fig. 2 erkennbar, dass das Trägerteil 26 eine flanschartige vordere Befestigungs-Schnittstelle 38 aufweist, um das Trägerteil 26 mit dem vorderen Strukturabschnitt 16 zu verbinden. Analog weist das Trägerteil 26 auch eine flanschartige hintere Befestigungs-Schnittstelle 40 auf, um das Trägerteil 26 mit dem hinteren Strukturabschnitt 20 zu verbinden. Wie in Fig. 2 dargestellt, können die beiden Befestigungs-Schnittstellen 38, 40 grundsätzlich unterschiedlich ausgestaltet sein.

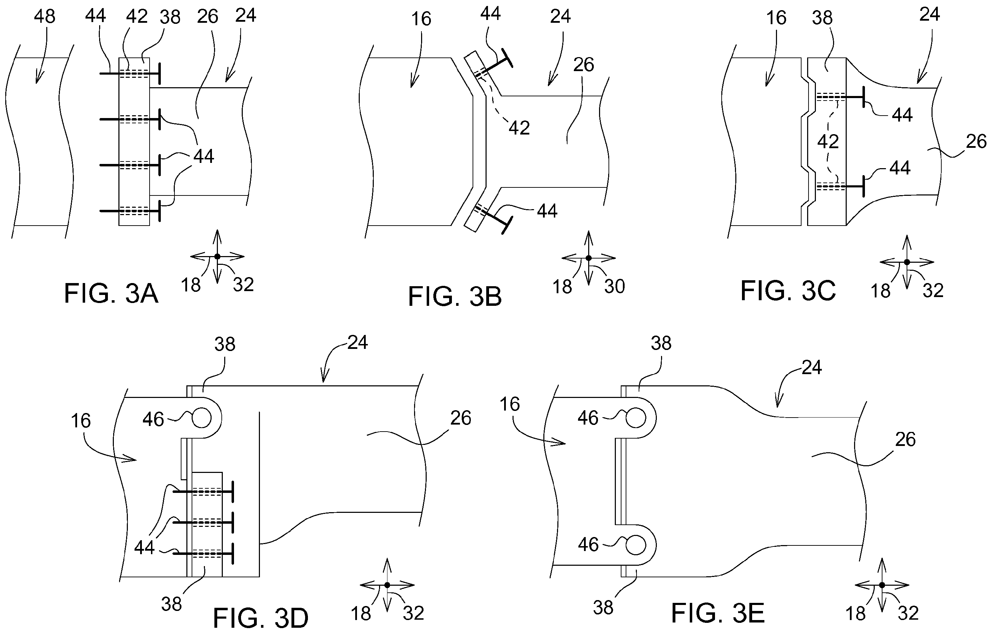

Vorzugsweise sind die Verbindungen zwischen den Befestigungs-Schnittstellen 38, 40 und den Strukturabschnitten 16, 20 starr ausgebildet. Hierzu sind anhand von Fig. 3a bis Fig. 3e noch zu beschreibende Verbindungsmittel vorgesehen. Diese können je nach Ausgestaltung eine lösbare oder unlösbare Verbindung zwischen den Befestigungs-Schnittstellen 38, 40 und den Strukturabschnitten 16, 20 herstellen. Diese Verbindungsmittel durchsetzen beispielsweise Durchgangslöcher 42 an den Befestigungs-Schnittstellen 38, 40.

In Fig. 3a bis Fig. 3e sind solche Verbindungsmittel dargestellt. Beispielsweise handelt es sich dabei um Spannelemente 44 in Form von Schraubbolzen, welche die Durchgangslöcher 42 durchsetzen und eine Verspannung zwischen dem vorderen Strukturabschnitt 16 und dem Trägerteil 24 bewirken. Die Spannkraftrichtung wirkt dabei z.B. im Wesentlichen horizontal in Fahrzeug-Längsrichtung 18 (Fig. 3a, Fig. 3c, Fig. 3d) oder in einem horizontalen Winkel (z.B. etwa 30° bis 45°) zur Fahrzeug-Längsrichtung 18 (Fig. 3b). Die vorgenannte Verbindung kann auch durch Verbindungsbolzen 46 unterstützt werden, welche den vorderen Strukturabschnitt 16 und die Befestigungs-Schnittstelle 38 des Trägerteiles 24 in Querrichtung 30 durchsetzen (Fig. 3d). Alternativ kann die Verbindung zwischen dem vorderen Strukturabschnitt 16 und dem Trägerteil 24 auch mittels mehrerer Verbindungsbolzen 46 realisiert sein, ohne dass die in Fahrzeug-Längsrichtung 18 ausgerichteten Spannelemente 44 verwendet werden (Fig. 3e). Gleichwohl können auch die Verbindungsbolzen 46 bei entsprechender Ausgestaltung (z.B. als Schraubbolzen) eine Spannkraft bewirken, die dann in Querrichtung 30 ausgerichtet ist.

Die hier offenbarten Verbindungstechniken zwischen dem vorderen Strukturabschnitt 16 und dem Trägerteil 24 können prinzipiell auch an der Befestigungs-Schnittstelle 40 zur Verbindung des hinteren Strukturabschnittes 20 mit dem Trägerteil 24 angewendet werden.

Zur Anpassung des Trägerteiles 24 an unterschiedlich dimensionierte Tragstrukturen 10 können Abstandhalter 48 vorgesehen sein (Fig. 3a), welche zwischen dem Trägerteil 24 und dem zugeordneten Strukturabschnitt 16, 20 angeordnet sein können.

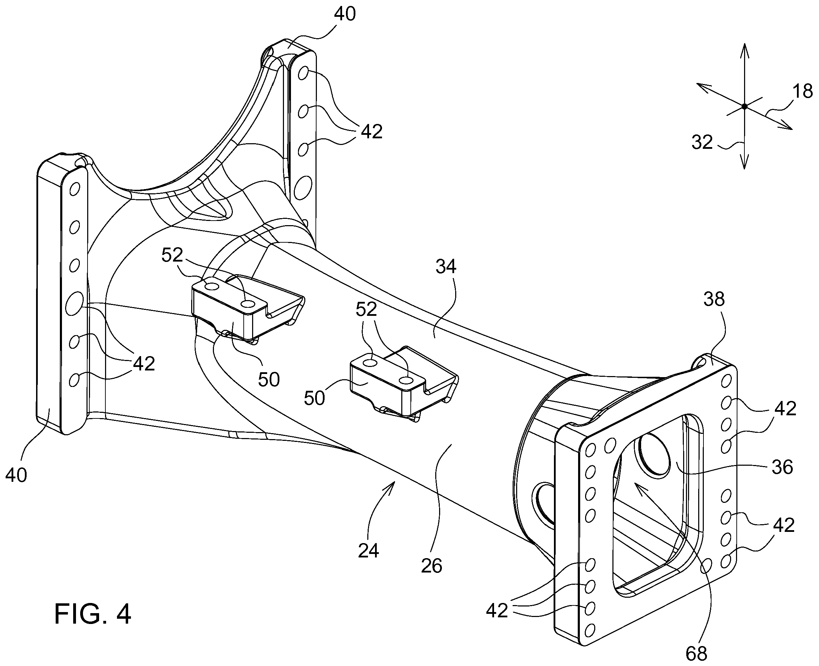

In Fig. 4 sind zwei Ausleger 50 erkennbar, welche in Hochrichtung 32 ausgerichtete Fixierlöcher 52 (z.B. Schraubinnengewinde) aufweisen. Die Ausleger 50 sind vorzugsweise einstückig mit der Trägerwand 26 verbunden. Weitere Ausleger 50 und ggf. auch in einer anderen Ausgestaltung können an der Trägerwand 26 angeordnet sein, wie dies beispielsweise in Fig. 1 dargestellt ist. Die Ausleger 50 dienen dazu, gemeinsam mit geeigneten Befestigungsmitteln an dem Trägerteil 24 eine Fahrzeugkomponente 54 oder zumindest einen Bestandteil dieser Fahrzeugkomponente 54 zu montieren.

Die Fahrzeugkomponente 54 (z.B. Kühler- oder Motoraggregat) kann als ein vollständiger Block an dem Trägerteil 24 montiert werden. Alternativ kann die Fahrzeugkomponente 54 aus mehreren Bestandteilen bestehen, von denen zunächst ein Bestandteil an dem Trägerteil 24 montiert wird, wie dies beispielhaft anhand einer Ölwanne 56 als Bestandteil eines Verbrennungsmotoraggregates in Fig. 1 dargestellt ist.

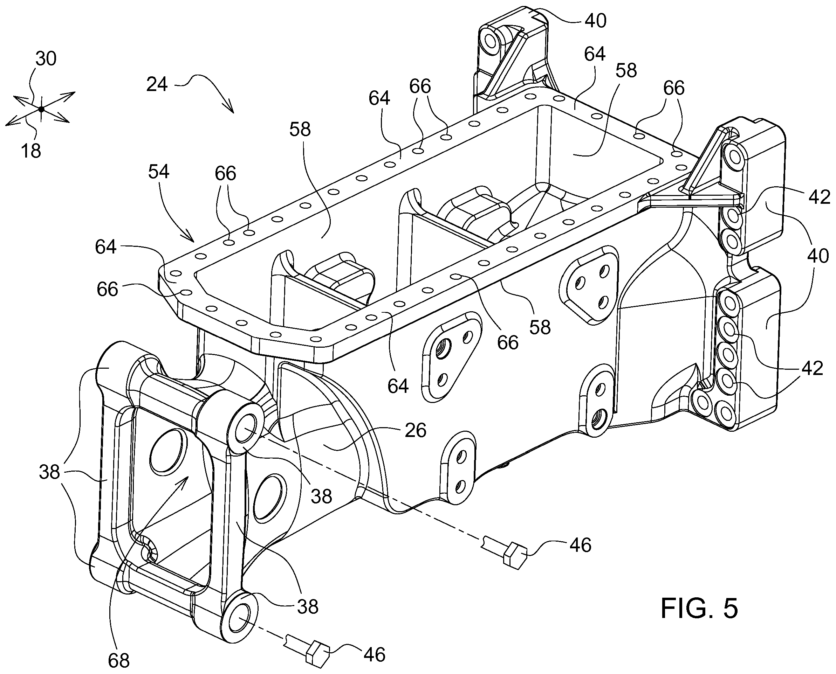

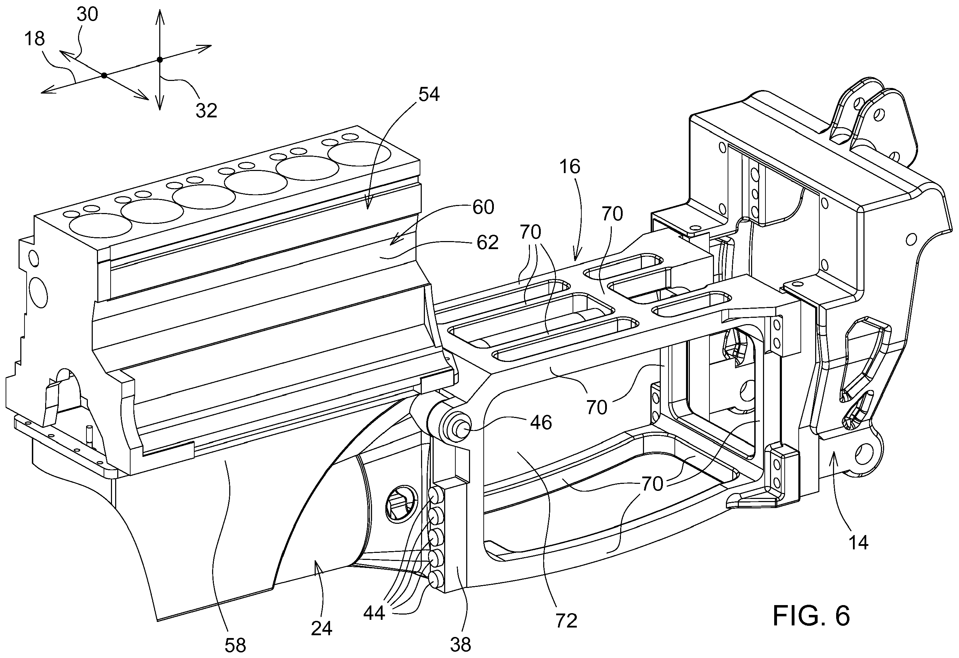

Abweichend davon ist erfindungsgemäß vorgesehen, dass ein Bestandteil der Fahrzeugkomponente 54 von vornherein mit dem Trägerteil 24 fest verbunden, vorliegend einstückig hergestellt ist, wie anhand der Komponentenwandung 58 in Fig. 5 dargestellt. Letztere begrenzt einen Hohlraum, der als eine Ölwanne für ein Motoraggregat 60 als Fahrzeugkomponente 54 wirksam ist (Fig. 6). Zur ordnungsgemäßen Fixierung bzw. Montage des Motoraggregates 60 ist der dessen Zylindern zugeordnete Bestandteil 62 an einer Montage-Schnittstelle 64 - ggf. unter Zwischenlage von Dämpfer- und/oder Abdichtungselementen - der Komponentenwandung 58 fixierbar. Zu diesem Zweck weist die Komponentenwandung 58 eine Vielzahl von Fixierlöchern 66 auf, um beispielsweise eine Schraubverbindung mit dem Motor-Bestandteil 62 zu realisieren.

Die Trägerwand 26 des Trägerteiles 24 begrenzt entlang der Umfangsrichtung 28 einen Aufnahmekanal 68 zur Aufnahme einer hier nicht dargestellten Antriebswelle eines Antriebsstranges des Fahrzeugs 12.

In Fig. 6 ist - im Vergleich zu Fig. 1 - eine weitere Ausführungsform des vorderen Strukturabschnittes 16 dargestellt. Bei dieser Ausführungsform weist der Strukturabschnitt 16 eine gitterartige Struktur mit mehreren Strukturstreben 70 auf. Diese Strukturstreben 70 sind im Einbauzustand der Tragstruktur 10 vorzugsweise im Wesentlichen in eine der Richtungen 18, 30, 32 angeordnet. Sie begrenzen einen in Fahrzeug-Querrichtung 30 zugänglichen Aufnahmeraum 72 zur Aufnahme der Vorderachs-Baugruppe 22.

## Patentansprüche

1. Fahrzeug mit einer Tragstruktur (10), welche
- einen vorderen Strukturabschnitt (16) zur Aufnahme einer Vorderachs-Baugruppe (22) aufweist, und
- einen dem vorderen Strukturabschnitt (16) in Fahrzeug-Längsrichtung (18) gegenüberliegenden hinteren Strukturabschnitt (20) aufweist,
wobei zwischen dem vorderen Strukturabschnitt (16) und dem hinteren Strukturabschnitt (20) als Bestandteil der Tragstruktur (10) ein Trägerteil (24) mit einer Trägerwand (26) angeordnet ist, welche quer zur Fahrzeug-Längsrichtung (18) in Umfangsrichtung (28) in sich geschlossen verläuft, **dadurch gekennzeichnet, dass** ein Bestandteil einer mehrteiligen Fahrzeugkomponente (54) einstückig als Komponentenwandung (58) mit dem Trägerteil (24) hergestellt ist, wobei die Komponentenwandung (58) einen Hohlraum begrenzt, der als eine Ölwanne für ein Motoraggregat (60) als Fahrzeugkomponente (54) wirksam ist.

2. Fahrzeug nach Anspruch 1, **dadurch gekennzeichnet, dass** der in sich geschlossene Verlauf der Trägerwand (26) einen Querschnitt (A, A1, A2, A3, A4) bildet, welcher entlang der Fahrzeug-Längsrichtung (18) unterschiedlich ausgebildet ist.

3. Fahrzeug nach Anspruch 1 oder 2, **dadurch gekennzeichnet, dass** das Trägerteil (24) eine vordere Befestigungs-Schnittstelle (38) aufweist zur Verbindung des Trägerteils (24) mit dem vorderen Strukturabschnitt (16).

4. Fahrzeug nach einem der vorhergehenden Ansprüche, **dadurch gekennzeichnet, dass** das Trägerteil (24) eine hintere Befestigungs-Schnittstelle (40) aufweist zur Verbindung des Trägerteils (24) mit dem hinteren Strukturabschnitt (20).

5. Fahrzeug nach Anspruch 3 oder 4, **dadurch gekennzeichnet, dass** die Verbindung zwischen dem Trägerteil (24) und mindestens einem der Strukturabschnitte (16, 20) starr und/oder lösbar ausgebildet ist.

6. Fahrzeug nach einem der Ansprüche 3 bis 5, **dadurch gekennzeichnet, dass** zwischen der Befestigungs-Schnittstelle (38, 40) und dem zugeordneten Strukturabschnitt (16, 20) mindestens ein Abstandhalter (48) angeordnet ist.

7. Fahrzeug nach einem der vorhergehenden Ansprüche, **dadurch gekennzeichnet, dass** die Trägerwand (26) des Trägerteiles (24) entlang der Umfangsrichtung (28) einen Aufnahmekanal (68) zur Aufnahme einer Antriebswelle eines Fahrzeug-Antriebsstranges begrenzt.

8. Fahrzeug nach einem der vorhergehenden Ansprüche, **dadurch gekennzeichnet, dass** der vordere Strukturabschnitt (16) eine gitterartige Struktur mit mehreren Strukturstreben (70) aufweist, wobei mindestens einige der Strukturstreben (70) einen in Fahrzeug-Querrichtung (30) zugänglichen Aufnahmeraum (72) zur Aufnahme der Vorderachs-Baugruppe (22) begrenzen.

## Claims

1. Vehicle with a supporting structure (10) which
- has a front structure portion (16) for receiving a front-axle assembly (22) and
- has a rear structure portion (20), which is located opposite the front structure portion (16), as seen in the longitudinal direction (18) of the vehicle,
wherein there is arranged between the front structure portion (16) and the rear structure portion (20),as a constituent part of the supporting structure (10), a support part (24) with a support wall (26), which runs in a self-contained manner in the circumferential direction (28), as seen perpendicularly to the longitudinal direction (18) of the vehicle, **characterized in that**, thaat one constituent part of a multi-part vehicle component (54) is made in one piece with the support part (24) in the form of a component wall (58), wherein the component wall (58) delimits a cavity which acts as an oil sump for an engine unit (60), in the form of a vehicle component (54).

2. Vehicle according to Claim 1, **characterized in that** the self-contained progression of the support wall (26) forms a cross section (A, A1, A2, A3, A4), which is formed differently along the longitudinal direction (18) of the vehicle.

3. Vehicle according to Claim 1 or 2, **characterized in that** the support part (24) has a front fastening interface (38) for connecting the support part (24) to the front structure portion (16).

4. Vehicle according to any one of the preceding claims, **characterized in that** the support part (24) has a rear fastening interface (40) for connecting the support part (24) to the rear structure portion (20).

5. Vehicle according to Claim 3 or 4, **characterized in that** the connection between the support part (24) and at least one of the structure portions (16, 20) is rigid and/or releasable.

6. Vehicle according to any one of Claims 3 to 5, **characterized in that** at least one spacer (48) is arranged between the fastening interface (38, 40) and the associated structure portion (16, 20).

7. Vehicle according to any one of the preceding claims, **characterized in that**, along the circumferential direction (28), the support wall (26) of the support part (24) delimits a receiving channel (68) for receiving a drive shaft of a vehicle drive train.

8. Vehicle according to any one of the preceding claims, **characterized in that** the front structure portion (16) has a grid-like structure with a plurality of structure struts (70), wherein at least some of the structure struts (70) delimit a receiving space (72) which is accessible in the transverse direction (30) of the vehicle and is intended for receiving the front-axle assembly (22).

## Revendications

1. Véhicule avec une structure porteuse (10), laquelle
- comporte une section avant (16) de structure destinée à recevoir un module d'essieu avant (22), et
- comporte une section arrière (20) de structure faisant face dans le sens longitudinal (18) du véhicule à la section avant (16) de structure,
une partie de support (24) avec une paroi de support (26), laquelle s'étend fermée sur elle-même dans la direction périphérique (28) transversalement au sens longitudinal (18) de véhicule, étant disposée entre la section avant (16) de structure et la section arrière (20) de structure en tant que partie intégrante de la structure porteuse (10), **caractérisé en ce qu'**une partie intégrante d'un composant (54) de véhicule en plusieurs parties est fabriquée d'un seul tenant comme une paroi (58) de composant avec la partie de support (24), la paroi (58) de composant délimitant un espace creux, qui, comme un carter d'huile, est efficace pour un groupe moteur (60) en tant que composant (54) de véhicule.

2. Véhicule selon la revendication 1, **caractérisé en ce que** le profil fermé sur lui-même de la paroi de support (26) forme une section transversale (A, A1, A2, A3, A4), qui est réalisée différemment le long du sens longitudinal (18) du véhicule.

3. Véhicule selon la revendication 1 ou 2, **caractérisé en ce que** la partie de support (24) comporte une interface de fixation avant (38) destinée à relier la partie de support (24) à la section avant (16) de structure.

4. Véhicule selon l'une des revendications précédentes, **caractérisé en ce que** la partie de support (24) comporte une interface de fixation arrière (40) destinée à relier la partie de support (24) à la section arrière (20) de structure.

5. Véhicule selon la revendication 3 ou 4, **caractérisé en ce que** la liaison entre la partie de support (24) et au moins une des sections (16, 20) de structure est réalisée de manière rigide et/ou amovible.

6. Véhicule selon l'une des revendications 3 à 5, **caractérisé en ce qu'**au moins un écarteur (48) est disposé entre l'interface de fixation (38, 40) et la section (16, 20) de structure associée.

7. Véhicule selon l'une des revendications précédentes, **caractérisé en ce que** la paroi de support (26) de la partie de support (24) délimite, le long de la direction périphérique (28), un canal de réception (68) destiné à recevoir un arbre d'entraînement d'un groupe motopropulseur de véhicule.

8. Véhicule selon l'une des revendications précédentes, **caractérisé en ce que** la section avant (16) de structure comporte une structure de type treillis avec plusieurs entretoises (70) de structure, au moins certaines des entretoises (70) de structure délimitant un espace de réception (72) accessible dans le sens transversal (30) du véhicule, destiné à recevoir le module d'essieu avant (22).
